# EUROPEAN PATENT SPECIFICATION

(11) **EP 4 411 279 B1**
(45) Date of publication and mention of the grant of the patent: **23.10.2024**
(21) Application number: 23154203.6
(22) Date of filing: 31.01.2023
(51) Int. Cl.: F25B 1/00, B01D 1/28, F24D 3/18, F25B 30/00, F25B 39/00, B01D 1/16

(54) **AN ENERGY SYSTEM COMPRISING A MECHANICAL VAPOR RECOMPRESSION (MVR) UNIT FOR USING THERMAL ENERGY GENERATED BY THE MVR-UNIT, AND A METHOD IN RELATION THERETO**
ENERGIESYSTEM MIT EINER EINHEIT ZUR MECHANISCHEN DAMPFREKOMPRESSION (MVR) ZUR VERWENDUNG VON DURCH DIE MVR-EINHEIT ERZEUGTER WÄRMEENERGIE UND ASSOZIIERTES VERFAHREN
SYSTÈME D'ÉNERGIE COMPRENANT UNE UNITÉ DE RECOMPRESSION DE VAPEUR MÉCANIQUE (MVR) POUR UTILISER L'ÉNERGIE THERMIQUE GÉNÉRÉE PAR L'UNITÉ MVR, ET PROCÉDÉ ASSOCIÉ

(43) Date of publication of application: 07.08.2024
(73) Proprietor: Aquafair AB, 193 33 Sigtuna (SE)
(72) Inventor: CARLMAN, Fredrik, Örebro (SE); ÅHRSTRÖM, Bert-Olof, Örnsköldsvik (SE)
(74) Representative: Bjerkén Hynell KB

(56) References cited:
- WO-A1-97/40327
- CN-A- 105 363 227
- HE W F ET AL: "Performance analysis of the mechanical vapor compression desalination system driven by an organic Rankine cycle", ENERGY, ELSEVIER, AMSTERDAM, NL, vol. 141, 5 October 2017 (2017-10-05), pages 1177 - 1186, XP085312089, ISSN: 0360-5442, DOI: 10.1016/J.ENERGY.2017.10.014

## Description

### Technical field

The present invention relates to an energy system comprising a mechanical vapor recompression (MVR) unit and to a method of operating the energy system, including using thermal energy generated by the MVR-unit. The energy system and the method are arranged to utilize thermal energy generated by the MVR-unit for use externally of the energy system, e.g. for processes and objects outside of the energy system.

### Background

Mechanical vapor recompression (MVR) or mechanical vapor compression (MVC) are two similar methods applying pressure/volume work to water vapor, in order to increase its enthalpy thereby superheating the steam. The rationale behind is that heating already formed vapor costs comparatively little energy comparing to generating new pristine vapor. In order to successfully enable the recuperation of the evaporation heat, which constitutes the majority of the heat into the system, a positive and significant temperature difference between the superheated steam and the recipient medium, driving the re-flux of energy in the reverse direction, is needed to become established. This is the main reason for steam (re)compression.

An MVR-unit usually comprises an evaporator, where the evaporation of a working medium takes place, a condenser, where the condensation takes place, a compressor that compresses the steam from the evaporator to a superheated state, a heating unit for initiating the evaporation process in the evaporator, and a control system that monitors and controls the process.

Below some patent documents within the technical field of MVR will be briefly discussed. In the EP2716341 a system and a method is described for liquid treatment by mechanical vapor recompression comprising a fixed fluid-tight evaporator housing with improved characteristics regarding the heat exchange between heated vapor-containing volume and recompressed heating vapor-containing volume.

WO2022/089827 describes a process water distillation plant comprising a control device arranged to control the supply of energy from an energy source into the process water distillation plant depending on the progress of the distillation process in the process water distillation plant.

In EP3689449 a system for energy recycling using mechanical vapor recompression in combined chemical process is described.

WO2022/243287 describes a robust mechanical vapor recompression arrangement comprising a compound turbine system.

In HE W F et al: "Performance analysis of the mechanical vapor compression desalination system driven by an organic Rankine cycle", ENERGY, ELSEVIEW, AMSTERDAM, NL, vol. 141, 5 October 2017, pages 1177-1186, EP085312089, ISSN: 03660-5442, DOI: 10.1016/J.ENERG/.2017.10.014 is disclosed use of MVR technology.

In WO97/40327 is disclosed a compression absorption heat pump.

The above mentioned documents describe systems and methods where mechanical vapor recompression is used. However, by applying their detailed knowledge of MVR, the inventors have identified and realized further applications and utilizations of the MVR-technology, not presently known.

### Summary

The object of the present invention is to use the heat generating capabilities that the processes Mechanical Vapor Recompression (MVR) and Mechanical Vapor Compression (MVC) utilize and possess. These said, already known, processes utilize the fact that compression of water vapor (steam) leads to an increase of temperature of the compressed steam. In energy terminology; the increase of thermal energy, of the steam, exceeds the energy needed to induce the necessary pressure/volume work of the said steam. In other words; the coefficient of performance (COP) or ratio between heat generation to energy insertion, of the steam/compression work, exceeds unity. As discussed above, this has already been used today as a way to treat water in a evaporation-vapor compression-condensation loop, e.g. in desalination, whereby the heated steam leads water to boil and evaporate.

However, the applications of the said processes are most often desalination or purification of contaminated water. Since the process involves boiling, evaporation and condensation, the condensate is both pure and desalinated. Besides, it is also hot (around 100 °C if the process takes place in atmospheric pressure). To date, the relatively high temperature of the condensate has not been utilized as a primary result of the process. Rather, the high temperature of the condensate has historically always been used to pre-heat the working liquid, to become treated in the MVR process, in an effort to increase the internal efficiency of the MVR/MVC processes.

The inventors have realized a further and a very beneficial application of the MVR-technology. The core of the present invention is that no-one has previously used the hot temperature working liquid, in particular the condensate of the working liquid, (typically 100 °C), for heating purposes of external objects or spaces, such as buildings, or in heat consuming industrial processes such as absorption chilling. In other words, the uniqueness of the energy system and method according to the present invention, is to utilize the MVR/MVC process as a way to generate hot working liquid which is used to heat external objects or spaces (such as buildings or industrial processes), and not, as in the above discussed known applications of the MVR-technology, to increase the internal efficiency of the MVR/MVC process.

An essential aspect of the present invention, as defined by the independent claims, is the focus on utilization of heat and not the pure condensate as such. Although it is technically possible, it is not a primarily interest to tap off the condensed water. Therefore, it is advantageous for the process to run in a "closed loop", whereby the working liquid, after exchanging parts (or the entirety) of its heat energy to an external object such as a building, via a heat exchanger or directly, goes back into the MVR process. However, as mentioned above, one could also imagine where parts of the working liquid is tapped off for particular reasons, and utilized as hot, desalinated water, although this, unlike the closed loop process, requires new water (or any other liquid used in the process) to be added to the process. For most purposes of heating of industrial processes or buildings, e.g. district heating, and heating of individual houses, this is neither desired, nor practical, so therefore, the solution defined by the appended claims primarily utilizes a closed loop.

Thus, it is worth emphasizing that the object of the present invention and the primary goal for the claimed energy system and method is to produce a working liquid (preferably hot water) with high efficiency, for external use.

The working fluid resulting from the MVR/MVC process is particularly suitable for heating purposes since it consists of distilled and desalinated water with low corrosivity - a necessary prerequisite for heating systems since radiators, heat exchangers and transportation pipelines are usually ferrous. The solution provides thus a new use of the MVR-technology, as a way to generate e.g. hot water of suitable quality, for the purpose that generated hot water releases part of its energy to external processes and objects, e.g. buildings, e.g. for heating purposes.

The above object is achieved by the energy system and the method according to the independent claims.

Preferred embodiments are set forward by the dependent claims.

According to a first aspect of the invention, the object is achieved by an energy system according to claim 1. Thus, the invention relates to an energy system arranged to generate and to use thermal energy, where the energy system comprises a mechanical vapor recompression (MVR) unit, wherein thermal energy of a working liquid obtained during an MVR process performed by the MVR unit is utilized externally of the energy system, preferably for heating processes or objects.

The energy system comprises at least one liquid line where the working liquid flows. This, at least one, liquid line is arranged in a configuration outside the energy system, preferably in a closed loop configuration, and provides energy to consumers for applicable use. In this embodiment no heat exchanger (neither arranged inside nor outside of the energy system) is required for heat exchanging the working liquid with an external working fluid. Instead the working liquid, flowing in the at least one liquid line, carries the thermal energy generated by the MVR-unit, to the energy consumers, by itself, and, preferably, returns to the energy system in a closed loop configuration. This is advantageous as it probably provides the highest energy transfer efficiency a MVR-process can produce. A closed loop configuration is often preferred, however, there are applications where parts of the working liquid may be tapped off from the liquid line and used, e.g. if hot water is needed. In that case a pipe is provided to replace the tapped off volume of the working liquid.

In another embodiment, the energy system comprises at least one secondary heat exchanger arranged for heat exchange between the condensed working liquid flowing in an at least one liquid line and an external working fluid (i.e. a gas or a liquid) flowing in an at least one external fluid line to use thermal energy generated by the MVR-unit. In this embodiment, the condensed working liquid flows in a separate closed loop configuration. This is advantageous as it provides a highly efficient and flexible MVR-process.

The energy system comprises a mechanical vapor recompression MVR unit comprising:
- a primary heat exchanger, arranged to evaporate a working liquid provided to the primary heat exchanger;
- a compressor arranged to compress vapor produced in the primary heat exchanger and arranged to deliver the compressed vapor to the primary heat exchanger to evaporate the working liquid in the primary heat exchanger;
- at least one primary vapor line arranged in connection to the primary heat exchanger and to the compressor for transport of vapor produced in the primary heat exchanger to the compressor, and
- a condenser arranged to condense the compressed vapor to a condensed working liquid.

The MVR-unit comprises at least one liquid line arranged in connection to the condenser and via an external thermal energy consumer to the primary heat exchanger for transport of the working liquid back to the primary heat exchanger for re-evaporation in the primary heat exchanger. Because the at least one liquid line is arranged in connection to the condenser and to the primary heat exchanger for transport of the condensed working liquid back to the primary heat exchanger for re-evaporation in the primary heat exchanger, the working liquid is arranged to circulate in a closed loop. The condensed working liquid, having transferred some of its energy to the external heat consumer, is transported back to the primary heat exchanger in a closed loop, substantially with no mass losses. This enables a way of efficient energy recuperation since less energy is needed to evaporate the working liquid circulating in a closed loop comparing to the known systems.

The working liquid circulating in a closed loop is an advantageous design of an MVR-unit because historically, in one application, the MVR technology has been used to produce desalinated and distilled water for e.g. drinking purposes or industrial purposes, where the condensed working liquid (that can be water) has been used as a product from MVR. The closed loop arrangement of the working liquid enables use of the MVR-unit as a high-efficient producer of thermal energy to be used outside the MVR-unit. According to one embodiment, the condensed working liquid is not sent out as it is done according to previous solutions, e.g. to produce drinking water or purified water for industrial applications, but is essentially reused in the primary heat exchanger.

In one embodiment, the energy system comprises at least one secondary heat exchanger arranged for heat exchange between the condensed working liquid flowing in the at least one liquid line and the external working fluid flowing in the at least one external fluid line Thus, the thermal energy generated by the MVR-unit according to the present invention is used in an efficient way. Firstly, by transferring the thermal energy to the external working fluid, and secondly, by using the external working fluid directly in an external system, such as an energy system or industrial system, and/or by heat exchanging and/or mixing the external working fluid with an additional working fluid from an external system. There are no limitations regarding the external system that can utilize thermal energy generated by the MVR-unit. Any systems where thermal energy from a liquid or gas carrier is of interest, can be connected to the MVR-unit. For example, thermal energy generated by the MVR-unit can be used in district heating, for heating of buildings, as energy storage, for industrial processes or similar, but also in airborne heating systems via an liquid to air heat exchanger.

A further advantage of the system according to present invention is that the energy system with the MVR-unit may be located at the desired location for utilization of thermal energy generated by the MVR-unit. The energy system with the MVR-unit may be arranged as a mobile system.

In one further embodiment, the MVR-unit comprises a common pressure-tight enclosure and wherein at least the primary heat exchanger and the condenser are arranged within the common pressure-tight enclosure. Thus, a compact-design MVR-unit is provided enabling arranging at least the primary heat exchanger and the condenser within the common pressure-tight enclosure. Mobility of the MVR-unit and of the energy system is thereby improved. Further, risk for leakage between the primary heat exchanger and the condenser is reduced.

According to a second aspect of the invention the object is achieved by a method according to the independent method claim.

Thus, the object is achieved by a method of operating an energy system, where the system is defined by at least the features of appended independent claim 1, for using thermal energy generated by a mechanical vapor recompression (MVR) unit. The method comprises utilizing externally said energy system, thermal energy of a working liquid obtained during an MVR process performed by the MVR-unit, preferably for heating processes or objects.

The energy system comprises at least one liquid line where the working liquid flows, and the method comprises arranging the at least one liquid line in a configuration outside the energy system, preferably in a closed loop configuration, and providing it to energy consumers for any applicable use.

This is advantageous as it probably provides the highest energy transfer efficiency a MVR-process can produce, as no external heat exchanging is required, and thus, the thermal energy of the working liquid may be efficiently obtained.

The method comprises heat exchanging the condensed working liquid with an external working fluid to use thermal energy generated by the MVR-unit. Because, according to this embodiment, the working liquid is transported back to the primary heat exchanger for re-evaporation in the primary heat exchanger, the working liquid is arranged to circulate in a closed loop. The condensed working liquid, deprived by external energy consumer of some of its energy, is transported back to the primary heat exchanger in a closed loop, substantially with no mass losses. This enables a new way of efficient energy recuperation since less energy is needed to evaporate the working liquid circulating in a closed loop.

Further, because the method preferably comprises the step of heat exchanging the working liquid with the external working fluid to use thermal energy generated by the MVR-unit, the thermal energy generated by the MVR-unit according to the present invention is used in an efficient way. Firstly, by transferring the thermal energy to the external working fluid, and secondly by using the external working fluid directly in an external system, such as an energy system or industrial system, and/or by heat exchanging the external working fluid with an additional working fluid of an external system.

There are no limitation regarding the external system that can utilize thermal energy generated by the MVR-unit. Any systems where thermal energy from a liquid or gas carrier is of interest, can be connected to the MVR-unit. For example, thermal energy generated by the MVR-unit can be used in district heating, for heating of buildings, as energy storage, for industrial and other technical processes or similar, and liquid to liquid heat exchanging or liquid to air heat exchanging.

Preferably, the working liquid is water, and the external working fluid is a liquid and/or a gas. Thus, for example oil, water or air can be used as the external working fluid.

Accordingly, a method for using thermal energy generated by a mechanical vapor recompression (MVR) unit is provided and thereby the above-mentioned object is achieved.

### Brief description of the drawings

Fig. 1 is a block diagram schematically illustrating an energy system comprising an MVR-unit according to an embodiment of the invention.
Fig. 2 is a block diagram schematically illustrating an energy system comprising an MVR-unit according to another embodiment of the invention.
Fig. 3 is a block diagram schematically illustrating an energy system comprising an MVR-unit according to a further embodiment of the invention.
Fig. 4 is a schematic illustration of the energy system illustrated in Fig. 1 and Fig. 2 according to some embodiments.
Fig. 5 is a flow diagram illustrating a method according to the invention.

### Detailed description

The energy system will now be described in detail with references to the appended figures. Throughout the figures the same, or similar, items have the same reference signs.

Moreover, the items and the figures are not necessarily to scale, emphasis instead being placed upon illustrating the principles of the invention.

In the figures, the arrows illustrate the flow direction in the respective line.

Within the application the expression working liquid should be interpreted as a working liquid used and obtained during the MVR process, as a condensate of the working liquid, where the working liquid is in a boiling or heated state.

According to the invention, an energy system 1, 1', 1" is provided, arranged to generate and to use thermal energy. The energy system comprises a mechanical vapor recompression (MVR) unit 3, wherein thermal energy of a working liquid obtained during an MVR process performed by the MVR-unit is utilized externally the energy system, preferably for heating processes, spaces or objects.

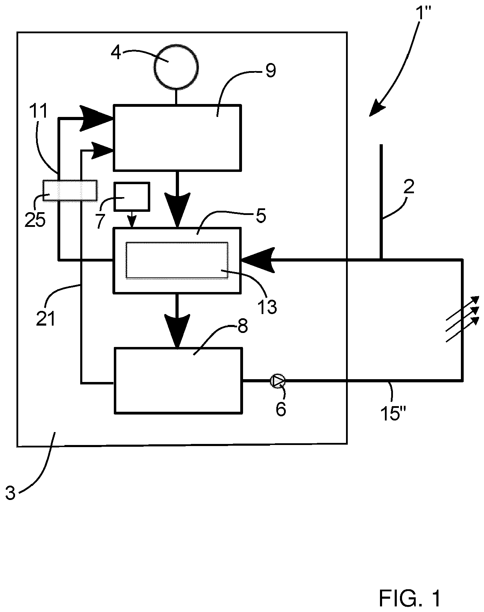

According to one embodiment, illustrated by figure 1, the energy system 1" comprises at least one liquid line 15" where the working liquid flows. The at least one liquid line is arranged in a configuration outside the energy system, preferably in a closed loop configuration, which is illustrated in figure 1, and provided to energy consumers for any applicable use. The thermal energy provided to the outside energy consumers is schematically indicated by arrows. In a variation of this embodiment, parts of the working liquid are tapped off from the liquid line and used for external purposes, e.g. if hot water is needed. In that case a pipe 2 is provided to replace the tapped off volume of the working liquid.

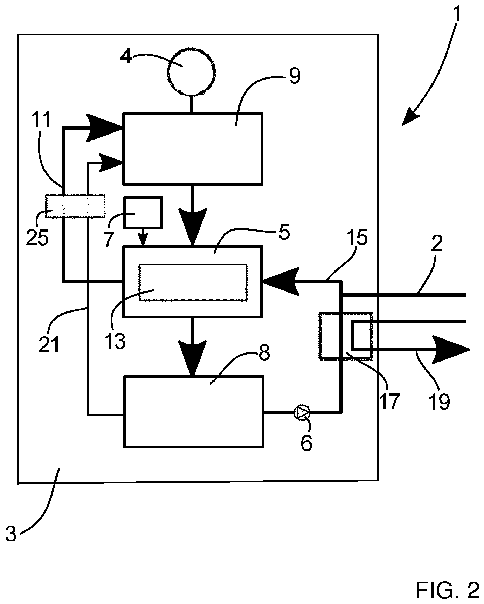

According to embodiments illustrated by figures 2-4, the energy system 1, 1' comprises at least one secondary heat exchanger 17 arranged for heat exchange between the working liquid flowing in an at least one liquid line 15, 15' and an external working fluid (liquid or gas) flowing in at least one external fluid line 19 to use thermal energy generated by the MVR-unit 3.

With reference to figures 1-4, an energy system 1, 1', 1" according to embodiments of the present invention is schematically illustrated in block diagrams. The energy system is arranged to generate and to use thermal energy. The energy system 1 comprises a mechanical vapor recompression (MVR) unit 3. The MVR-unit 3 comprises a primary heat exchanger 5 arranged to evaporate a working liquid provided to the primary heat exchanger 5. The working liquid may be water provided to the primary heat exchanger 5 via a pipe 2 connected to an outer source of working liquid (not shown).

Preferably, the MVR-unit comprises a heating unit 7 arranged to heat the working liquid in the primary heat exchanger 5 to initiate the evaporation of the working liquid. After the working liquid has been provided to the primary heat exchanger 5, the heating unit 7 is activated to heat the working liquid in the primary heat exchanger 5. The heating unit 7 may be an electric heating unit. In the case of water as the working liquid, water is heated to approximately 85-95 °C by means of the heating unit 7 which is then turned off.

The MVR-unit comprises a compressor 9 arranged to compress vapor produced in the primary heat exchanger 5 and arranged to deliver the compressed vapor to the primary heat exchanger 5 to evaporate the working liquid in the primary heat exchanger 5. Preferably, the compressor 9 is driven by a motor 4 which is started after the heating unit 7 has initially heated the working liquid in the primary heat exchanger 5.

The MVR-unit 3 also comprises a primary vapor line 11 arranged in connection to the primary heat exchanger 5 and to the compressor 9 for transport of vapor produced in the primary heat exchanger 5 to the compressor 9. Further, the MVR-unit 3 comprises a condenser 13 arranged to condense the compressed vapor to a condensed working liquid.

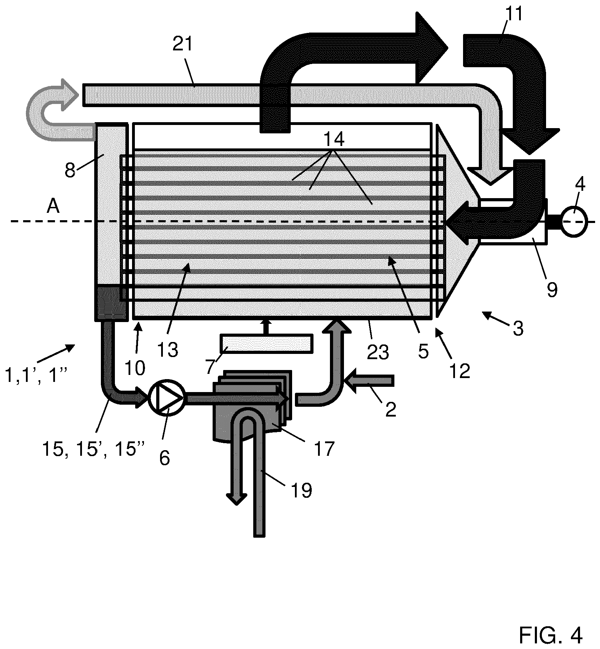

The condenser 13 is included in the primary heat exchanger 5. Thus, one side or section of the primary heat exchanger 5 will then work as the condenser 13, and another side or section of the primary heat exchanger 5 will work as an evaporator to evaporate the working liquid in the primary heat exchanger 5. For example, the primary heat exchanger 5 may comprise a plurality of heat exchanging elements, such as lateral or longitudinal pipes, and the inside of the pipes may then work as the condenser 13, and the outsides of the pipes may work as the evaporator, or opposite around; the outsides of the pipes may then work as the condenser 13, and the inside of the pipes may work as the evaporator. This embodiment will be described in details in relation to figure 4.

Thus, when the desired temperature is reached (for water, approximately 85-95 °C), the heating unit 7 is disengaged, and the compressor 9 is engaged. As the compressor 9 starts, it lowers the pressure in the inlet manifold to the compressor 9 to slightly under ambient pressure, which propagates to the primary heat exchanger 5 connected to the compressor 9 via the primary vapor line 11, slightly lowering its pressure to slightly under ambient pressure. This pressure decrease enables the boiling of water (and subsequently production of steam) below 100 °C. As steam forms readily below 95 °C, it gets compressed by the compressor 9 and elevated, by the inserted pressure/volume work, to a temperature of approximately 120 °C with comparably little effort, in this described exemplary situation. The superheated steam is then lead to the primary heat exchanger 5 for evaporation of water in the primary heat exchanger.

An essential aspect of the embodiments of the energy system as defined by the appended claims, is that the MVR-unit 3 comprises at least one liquid line 15, 15', 15" arranged in connection to the condenser 13 of the primary heat exchanger 5 for transport of the condensed working liquid, and for delivery of the thermal energy of the working liquid to external consumers, and back to the primary heat exchanger 5, specifically back to the evaporator side or section of the primary heat exchanger 5, for re-evaporation in the primary heat exchanger 5. Preferably, the MVR-unit 3 comprises a pump 6 arranged on the liquid line 15, 15', 15" to pump the working liquid via external thermal energy consumers to the primary heat exchanger 5. According to the embodiments illustrated in the figures, the MVR-unit 3 comprises only one liquid line.

According to the embodiments illustrated in the figures the MVR-unit comprises a collection compartment 8 arranged in connection to the condenser 13 for collecting the condensed working liquid and vapors that have not been condensed. Thus, collecting of the condensed working liquid and vapor that has not been condensed is facilitated by the collection compartment 8.

Further, according to the illustrated embodiments the liquid line 15, 15', 15" is connected to the collection compartment 8. However, as an alternative variation, the liquid line may be directly connected to the condenser 13 of the primary heat exchanger 5.

Because the liquid line 15 in the embodiments illustrated in figures 1-4 is arranged in connection to the collection compartment 8 or possibly directly to the condenser 13 and to the primary heat exchanger 5 for transport of the condensed working liquid back to the primary heat exchanger 5 for re-evaporation in the primary heat exchanger 5, the working liquid is arranged, according to the illustrated embodiments, to circulate in a closed loop. This enables a very efficient energy recuperation of the energy system 1, which is beneficial for the external thermal energy outtake from the at least one liquid line.

As illustrated in figures 1-4, the pipe 2 may be connected to the liquid line 15, 15', 15". However, the pipe 2 may be directly connected to the primary heat exchanger 5.

According to one embodiment, the energy system 1 also comprises at least one secondary heat exchanger 17 arranged for heat exchange between the working liquid flowing in the liquid line 15 and an external working fluid flowing in at least one external fluid line 19 to use thermal energy generated by the MVR-unit 3. According to the embodiments illustrated in figure 2, one secondary heat exchanger 17 and one external fluid line 19 is used. The external working fluid may be a liquid and/or a gas. Thus, for example, water and/or air can be used as the external working fluid.

Because the energy system 1, according to the embodiments illustrated in figures 2-4, comprises the secondary heat exchanger 17 arranged for heat exchange between the working liquid flowing in the liquid line 15 and an external working fluid flowing in an external fluid line 19 the thermal energy generated by the MVR-unit 3 will be used in an efficient way. Firstly, be transferring the thermal energy from the working liquid to the external working fluid, and secondly by using the external working fluid directly in an external system (not shown), such as an energy system or industrial system, and/or by heat exchanging the external working fluid with an additional working fluid of an external system.

According to the embodiment of the energy system 1 illustrated in figure 2, the liquid line 15 and the secondary heat exchanger 17 of the energy system 1 are comprised by the MVR-unit 3. Thus, the MVR-unit 3 may be provided to the intended location of use and then connected to an external system by the external liquid line 19 connected to the secondary heat exchanger 17.

The energy system 1 may comprise at least one secondary vapor line 21. According to the embodiments illustrated in figures 1-4, the MVR-unit 3 comprises one secondary vapor line 21 arranged in connection to the condenser 13 and to the compressor 9 for transport of the compressed vapor from the condenser 13 to the compressor 9. As discussed above, the MVR-unit 3 may be provided with a collection compartment 8 arranged in connection to the condenser 13 for collecting the condensed working liquid and vapors that have not been condensed. The secondary vapor line 21 is then connected to the collection compartment 8. Thus, an energy system 1 is provided where the uncondensed compressed vapor can be used. The compressed vapor are then, which is advantageous, transported to a higher compression stage of the compressor 9 than the vapor transported through the primary vapor line 11.

The MVR-unit 3 may comprise a separator 25 arranged in connection to the compressor 9 and arranged to separate droplets in the vapor transported to the compressor 9. Preferably, the separator 25 is arranged on the primary vapor line 11 and on the secondary vapor line 21.

The energy system 1 comprises a control system (not shown) arranged to monitor and to control the process of the MVR-unit and of the entire energy system regarding the pressure, temperature, flow ratio, compressor and pump performances together with other influential parameters of the system.

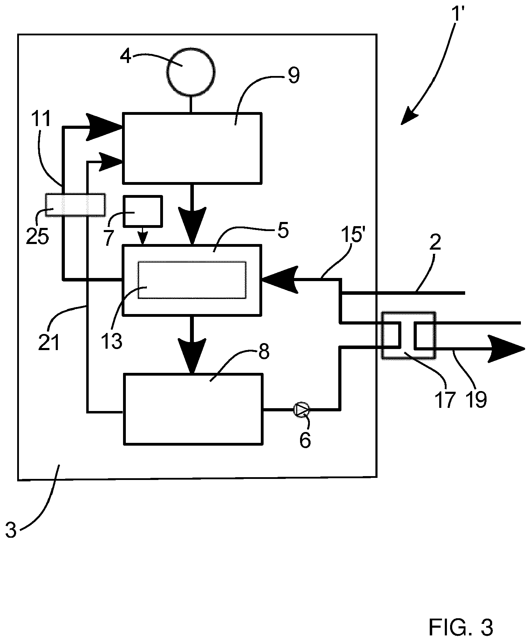

With reference to figure 3, an energy system 1' according to another embodiment, is schematically illustrated in a block diagram. The energy system 1' is arranged to generate and to use thermal energy generated by a MVR-unit 3 in a similar way as the energy system 1 described in relation to figure 2. The energy system 1' has the same technical features and advantages as the corresponding features of the energy system 1 described above. Consequently, these technical features and advantages are not repeated or explained anew in order to avoid unnecessary repetition.

According to the embodiments illustrated in figure 3, the secondary heat exchanger 17 of the energy system 1' is arranged outside the MVR-unit 3. Thus, the MVR-unit 3 may be provided to the intended location of use, where the secondary heat exchanger 17 and the external liquid line 19 have been prepared, and then may be connected to an external system by connection of the liquid line 15' of the MVR-unit 3 to the secondary heat exchanger 17.

Figure 4 is a schematic illustration of the energy system 1, 1', 1" illustrated in figures 1-3 according to some more specific embodiments. The MVR-unit 3 comprises a common pressure-tight enclosure 23 having a substantially circular cylindrical elongated shape along a longitudinal axis A. Many other shapes of the pressure-tight enclosure is naturally possible, e.g. enclosures having rectangular, elliptical, triangular, hexagonal, and other more complex cross-sectional shapes.

In figure 4, a compact design of the MVR-unit 3 is illustrated. The compact design of the MVR-unit 3 is achieved, inter alia because the primary heat exchanger 5, the compressor 9, and the condenser 13, which is a part of the primary heat exchanger 5, are arranged within the common pressure-tight enclosure 23.

The common pressure-tight enclosure 23 is provided with a first end 10, and with a second end 12, and wherein the secondary vapor line 21 is arranged at the first end 10 of the common pressure-tight enclosure 23 and the compressor 9 is arranged at the second end 12 of the common pressure-tight enclosure 23. Preferably, the first end 10 and the second end 12 are opposite ends of the common pressure-tight enclosure 23 along the longitudinal axis A.

The primary heat exchanger 5 comprises a plurality of longitudinal pipes 14. As illustrated in figure 4, the longitudinal pipes 14 are arranged horizontally along the longitudinal axis A.

The compressed vapor from the compressor 9 are provided into the inside of each pipe of the plurality of longitudinal pipes 14 to evaporate the working liquid provided to the outside of each pipe of the plurality of longitudinal pipes 14.

Thus, the superheated steam from the compressor 9 is provided through the inside of the horizontal set of pipes consisting of the plurality of the pipes 14, e.g. longitudinal pipes, that are submerged in an operating medium, i.e. in the working liquid. The pipes 14 are submerged in a denser medium of lower temperature than the steam from the compressor 9. The insides of the pipes 14 of the primary heat exchanger 5 work as the condenser 13 and the outsides of the pipes14 work as evaporator, and as disclosed above, the opposite, i.e. that the outsides of the pipes may then work as the condenser 13, and the inside of the pipes may work as the evaporator.

In a further variation, the longitudinal pipes are not submerged into the working liquid. Instead, the working liquid is dispersed evenly onto the pipes e.g. sprayed onto via spraying nozzles. This is advantageous regarding the steam production flow rate.

In the embodiment illustrated in figure 4, a secondary heat exchanger 17 is provided at the liquid line 15, for heat exchanging thermal energy from the working liquid flowing in the liquid line to an external fluid line 19. However, in another embodiment, similar to the embodiment illustrated in figure 1, the secondary heat exchanger 17, and the external fluid line 19, are not included and the liquid line 15 is instead directly arranged to provide thermal energy from the working liquid to any outside consumer.

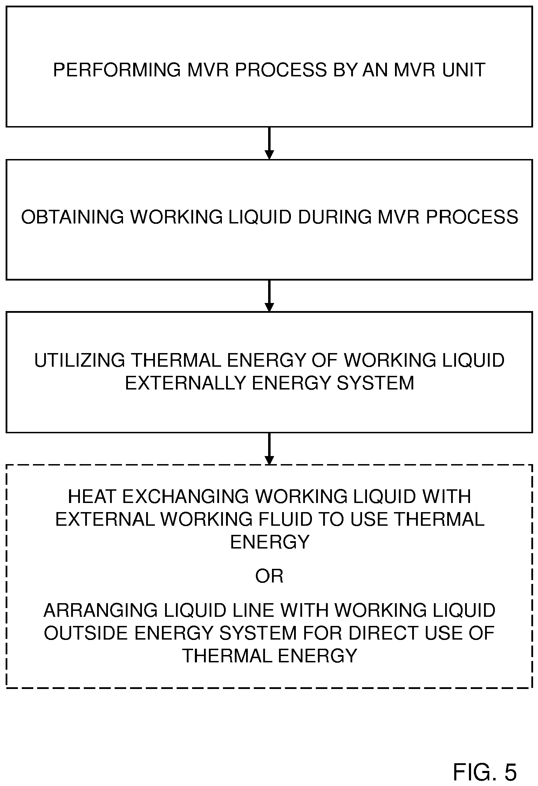

The present invention also relates to a method for using thermal energy generated by a mechanical vapor recompression (MVR) unit 3 of an energy system 1, 1', 1". The energy systems have been described in detail above and it is herein referred to that description. The method will now be described with references to the flow diagram shown in figure 5.

Thus, a method of an energy system is provided, where the energy system 1, 1', 1" comprises a mechanical vapor recompression (MVR) unit 3. The method comprises utilizing externally said energy system, thermal energy of a working liquid obtained during an MVR process performed by said MVR unit, preferably for heating processes, spaces or objects.

In the following, some embodiments of the method are listed. These have the same technical features and advantages as for the corresponding features of the energy systems 1, 1', 1" described above. Consequently, these technical features and advantages are not repeated or explained anew in order to avoid unnecessary repetition.

The energy system 1, 1', 1" comprises at least one liquid line 15" where the working liquid flows, and the method comprises arranging the at least one liquid line in a configuration outside the energy system, preferably in a closed loop configuration, and providing it to energy consumers for any applicable use.

According to another embodiment, the method comprises heat exchanging the working liquid with an external working fluid to use thermal energy generated by the MVR-unit 3. The present invention is not limited to the above-described preferred embodiments. Various alternatives, and modifications may be used. Therefore, the above embodiments should not be taken as limiting the scope of the invention, which is defined by the appending claims.

## Claims

1. An energy system (1, 1', 1") arranged to generate and to use thermal energy, the energy system (1, 1', 1") comprises a mechanical vapor recompression (MVR) unit (3), wherein thermal energy of a working liquid obtained during an MVR process performed by said MVR unit (3) is utilized externally said energy system (1, 1', 1"), preferably for heating processes, spaces or objects, wherein the MVR unit (3) comprises:
- a primary heat exchanger (5) arranged to receive:
- a working liquid and
- compressed vapor,
wherein the primary heat exchanger (5) is arranged to produce vapor by evaporation of the working liquid by heat exchanging the working liquid with the compressed vapor in the primary heat exchanger (5);
- a compressor (9) arranged to compress vapor produced in the primary heat exchanger (5) and arranged to deliver the compressed vapor to the primary heat exchanger (5) to evaporate the working liquid in the primary heat exchanger (5);
- at least one primary vapor line (11) arranged in connection to the primary heat exchanger (5) and to the compressor (9) for transport of vapor produced in the primary heat exchanger (5) to the compressor (9), and
wherein at least one liquid line (15, 15', 15") is arranged in connection to the condenser (13) of the primary heat exchanger (5) for transport of the condensed working liquid, and for delivery of the thermal energy of the working liquid to external consumers, and back to the primary heat exchanger (5), specifically back to an evaporator side or section of the primary heat exchanger (5), for re-evaporation in the primary heat exchanger (5).

2. The energy system (1") according to claim 1, wherein the at least one liquid line (15") is arranged in a configuration outside the energy system, preferably in a closed loop configuration, and provided to energy consumers for any applicable use.

3. The energy system (1, 1') according to claim 1 or 2, wherein the energy system (1, 1') comprises at least one secondary heat exchanger (17) arranged for heat exchange between the working liquid flowing in at least one liquid line (15, 15') and an external working fluid flowing in at least one external fluid line (19) to use thermal energy generated by the MVR-unit (3).

4. The energy system (1, 1', 1") according to any of claims 1-3, wherein the MVR-unit (3) comprises at least one secondary vapor line (21) arranged in connection to the primary heat exchanger (5) and to the compressor (9) for transport of compressed vapor, that has not been condensed in the primary heat exchanger (5) back to the compressor (9).

5. The energy system (1, 1', 1") according to any of claims 1-4, wherein the MVR-unit (3) comprises a compartment (8) connected to the primary heat exchanger (5) and arranged to collect the condensed compressed vapor from the primary heat exchanger (5) and to collect the compressed vapor, that has not been condensed in the primary heat exchanger (5), wherein the at least one liquid line (15, 15', 15") and/or the at least one secondary vapor line (21) is arranged in connection to the compartment (8).

6. The energy system (1, 1', 1") according to any claims 1-5, wherein the MVR-unit (3) comprises a common pressure-tight enclosure (23) and wherein at least the primary heat exchanger (5) is arranged within the common pressure-tight enclosure (23).

7. The energy system (1, 1', 1") according to claim 6, when depending on claim 4, wherein the common pressure-tight enclosure (23) is provided with a first end (10) and with a second end (12) and wherein the at least one secondary vapor line (21) is arranged at the first end (10) of the common pressure-tight enclosure (23) and the compressor (9) is arranged at the second end (12) of the common pressure-tight enclosure (23).

8. The energy system (1, 1', 1") according to claim 6 or 7, wherein the common pressure-tight enclosure (23) has a substantially cylindrical elongated shape, preferably a circular cylindrical elongated shape, along a longitudinal axis (A).

9. The energy system (1, 1', 1") according to any of claims 1-8, wherein the primary heat exchanger (5) comprises a plurality of longitudinal pipes (14).

10. The energy system (1, 1', 1") according to claim 9, wherein the compressed vapor from the compressor (9) is provided into the inside of each pipe of the plurality of longitudinal pipes (14) to evaporate the working liquid provided to the outside of each pipe of the plurality of longitudinal pipes (14), or wherein the outsides of the longitudinal pipes work as condenser (13), and the insides of the longitudinal pipes work as evaporator.

11. The energy system (1, 1', 1") according to any of the preceding claims, wherein the working liquid is water.

12. A method of operating an energy system (1, 1', 1') according to any of claims 1-11, wherein the method comprises utilizing, externally to said energy system (1, 1, 1" ), thermal energy of a working liquid obtained during an MVR process performed by said MVR-unit (3), preferably for heating processes or objects.

13. The method according to claim 12, wherein the method comprises arranging the at least one liquid line in a configuration outside the energy system, preferably in a closed loop configuration, and providing it to energy consumers for any applicable use.

14. The method according to claim 12 or 13, wherein the method comprises heat exchanging the working liquid with an external working fluid to use thermal energy generated by the MVR-unit (3).

## Patentansprüche

1. Energiesystem (1, 1', 1"), angeordnet zum Erzeugen und zum Verwenden thermischer Energie, wobei das Energiesystem (1, 1', 1") eine Einheit (3) zur mechanischen Dampfrekompression (MVR) umfasst, wobei während eines mit der MVR-Einheit (3) durchgeführten MVR-Prozesses erhaltene thermische Energie einer Arbeitsflüssigkeit außerhalb des Energiesystems (1, 1', 1") genutzt wird, vorzugsweise zum Erwärmen von Prozessen, Räumen oder Gegenständen, wobei die MVR-Einheit (3) umfasst:
- einen primären Wärmetauscher (5), angeordnet zu empfangen:
- eine Arbeitsflüssigkeit und
- komprimierten Dampf,
wobei der primäre Wärmetauscher (5) zum Erzeugen von Dampf durch Verdampfen der Arbeitsflüssigkeit durch Wärmetausch der Arbeitsflüssigkeit mit dem komprimierten Dampf in dem primären Wärmetauscher (5) angeordnet ist;
- einen Kompressor (9), angeordnet zum Komprimieren von in dem primären Wärmetauscher (5) erzeugtem Dampf und angeordnet zum Abgeben des komprimierten Dampfs zu dem primären Wärmetauscher (5) zum Verdampfen der Arbeitsflüssigkeit in dem primären Wärmetauscher (5);
- wenigstens eine primäre Dampfleitung (11), angeordnet in Verbindung mit dem primären Wärmetauscher (5) und dem Kompressor (9) für den Transport von in dem primären Wärmetauscher (5) erzeugtem Dampf zu dem Kompressor (9), und
wobei wenigstens eine Flüssigkeitsleitung (15, 15', 15") in Verbindung mit dem Kondensator (13) des primären Wärmetauschers (5) angeordnet ist zum Transport der kondensierten Arbeitsflüssigkeit, und zur Abgabe der thermischen Energie der Arbeitsflüssigkeit zu externen Verbrauchern, und zurück zu dem primären Wärmetauscher, speziell zurück zu einer Verdampferseite oder Abschnitt des primären Wärmetauschers (5) zur Re-Verdampfung in dem primären Wärmetauscher (5).

2. Energiesystem (1") nach Anspruch 1, wobei die wenigstens eine Flüssigkeitsleitung (15") in einer Konfiguration außerhalb des Energiesystems angeordnet ist, vorzugsweise in einer geschlossene-Schleife-Konfiguration, und für Energieverbraucher für jedwede brauchbare Anwendung vorgesehen ist.

3. Energiesystem (1, 1') nach Anspruch 1 oder 2, wobei das Energiesystem (1, 1') wenigstens einen sekundären Wärmetauscher (17) umfasst, angeordnet für den Wärmetausch zwischen der Arbeitsflüssigkeit in wenigstens einer Flüssigkeitsleitung (15, 15') und einem in wenigstens einer externen Fluidleitung (19) strömenden externen Arbeitsfluid zum Verwenden der durch die MVR-Einheit (3) erzeugten thermischen Energie.

4. Energiesystem (1, 1', 1") nach einem der Ansprüche 1-3, wobei die MVR-Einheit (3) wenigstens eine sekundäre Dampfleitung (21) umfasst, angeordnet in Verbindung mit dem primären Wärmetauscher (5) und dem Kompressor (9) zum Transport von nicht in dem primären Wärmetauscher (5) kondensiertem komprimiertem Dampf zurück zu dem Kompressor.

5. Energiesystem (1, 1', 1") nach einem der Ansprüche 1-4, wobei die MVR-Einheit (3) einen Raum (8) umfasst, welcher mit dem primären Wärmetauscher (5) verbunden ist und zum Sammeln des kondensierten komprimierten Dampfs von dem primären Wärmetauscher (5) angeordnet ist und zum Sammeln des komprimierten Dampfs angeordnet ist, der in dem primären Wärmetauscher (5) nicht kondensiert wurde, wobei die wenigstens eine Flüssigkeitsleitung (15, 15', 15") und/oder die wenigstens eine sekundäre Dampfleitung (21) in Verbindung mit dem Raum (8) angeordnet ist.

6. Energiesystem (1, 1', 1") nach einem der Ansprüche 1-5, wobei die MVR-Einheit (3) eine gemeinsame druckdichte Umhüllung (23) umfasst, und wobei wenigstens der primäre Wärmetauscher (5) innerhalb der gemeinsamen druckdichten Umhüllung (23) angeordnet ist.

7. Energiesystem (1, 1', 1") nach Anspruch 6, sofern von Anspruch 4 abhängig, wobei die gemeinsame druckdichte Umhüllung (23) ein erstes Ende (10) und ein zweites Ende (12) aufweist, und wobei die wenigstens eine sekundäre Dampfleitung (21) am ersten Ende (10) der gemeinsamen druckdichten Umhüllung (23) angeordnet ist und der Kompressor (9) am zweiten Ende (12) der gemeinsamen druckdichten Umhüllung (23) angeordnet ist.

8. Energiesystem (1, 1', 1") nach Anspruch 6 oder 7, wobei die gemeinsame druckdichte Umhüllung (23) eine im Wesentlichen zylindrisch langgestreckte Form, vorzugsweise eine kreiszylindrisch langgestreckte Form, entlang einer Längsachse (A) aufweist.

9. Energiesystem (1, 1', 1") nach einem der Ansprüche 1-8, wobei der primäre Wärmetauscher (5) eine Mehrzahl von Längsrohren (14) umfasst.

10. Energiesystem (1, 1', 1") nach Anspruch 9, wobei der komprimierte Dampf von dem Kompressor (9) in das Innere von jedem Rohr der Mehrzahl von Längsrohren (14) geleitet wird zum Verdampfen der an der Außenseite jedes Rohrs der Mehrzahl von Längsrohren (14) vorgesehenen Arbeitsflüssigkeit, oder wobei die Außenseiten der Längsrohre als Kondensator (13) arbeiten und die Innenseiten der Längsrohre als Verdampfer arbeiten.

11. Energiesystem (1, 1', 1") nach einen der vorangehenden Ansprüche, wobei die Arbeitsflüssigkeit Wasser ist.

12. Verfahren zum Betreiben eines Energiesystems (1, 1', 1") nach einem der Ansprüche 1-11, wobei das Verfahren die Verwendung während eines durch die MVR-Einheit (3) durchgeführten MVR-Prozesses erhaltener thermischer Energie einer Arbeitsflüssigkeit außerhalb des Energiesystems (1, 1', 1") umfasst, vorzugsweise zum Erwärmen von Prozessen oder Gegenständen.

13. Verfahren nach Anspruch 12, wobei das Verfahren das Anordnen der wenigstens einen Flüssigkeitsleitung in einer Konfiguration außerhalb des Energiesystems, vorzugsweise in einer geschlossene-Schleife-Konfiguration, und das Vorsehen derselben für Energieverbraucher für jedwede brauchbare Anwendung umfasst.

14. Verfahren nach Anspruch 12 oder 13, wobei das Verfahren einen Wärmetausch der Arbeitsflüssigkeit mit einem externen Arbeitsfluid zur Verwendung von durch die MVR-Einheit (3) erzeugter thermischer Energie umfasst.

## Revendications

1. Système énergétique (1, 1', 1") agencé pour générer et pour utiliser de l'énergie thermique, le système énergétique (1, 1', 1") comprend une unité de recompression mécanique de vapeur (MVR) (3), dans lequel l'énergie thermique d'un liquide de travail obtenu pendant un processus MVR réalisé par ladite unité MVR (3) étant utilisée de manière externe par ledit système énergétique (1, 1', 1"), de préférence pour des processus de chauffage, des espaces ou des objets, dans lequel l'unité MVR (3) comprend :
- un échangeur de chaleur primaire (5) agencé pour recevoir :
- un liquide de travail et
- de la vapeur comprimée,
dans lequel l'échangeur de chaleur primaire (5) est agencé pour produire de la vapeur par évaporation du liquide de travail par échange de chaleur du liquide de travail avec la vapeur comprimée dans l'échangeur de chaleur primaire (5) ;
- un compresseur (9) agencé pour comprimer la vapeur produite dans l'échangeur de chaleur primaire (5) et agencé pour délivrer la vapeur comprimée à l'échangeur de chaleur primaire (5) pour évaporer le liquide de travail dans l'échangeur de chaleur primaire (5) ;
- au moins une conduite de vapeur primaire (11) agencée en raccordement avec l'échangeur de chaleur primaire (5) et avec le compresseur (9) pour transporter la vapeur produite dans l'échangeur de chaleur primaire (5) vers le compresseur (9), et dans lequel l'au moins une conduite de liquide (15, 15', 15'') est agencée en raccordement avec le condenseur (13) de l'échangeur de chaleur primaire (5) pour transporter le liquide de travail condensé, et pour délivrer de l'énergie thermique du liquide de travail à des consommateurs externes, et en retour vers l'échangeur de chaleur primaire (5), spécifiquement en retour vers un côté ou une section d'évaporateur de l'échangeur de chaleur primaire (5), pour la re-évaporation dans l'échangeur de chaleur primaire (5).

2. Système énergétique (1'') selon la revendication 1, dans lequel l'au moins une conduite de liquide (15") est agencée dans une configuration à l'extérieur du système énergétique, de préférence dans une configuration en boucle fermée, et est fournie à des consommateurs d'énergie pour toute utilisation applicable.

3. Système énergétique (1, 1') selon la revendication 1 ou 2, dans lequel le système énergétique (1, 1') comprend au moins un échangeur de chaleur secondaire (17) agencé pour un échange de chaleur entre le liquide de travail s'écoulant dans l'au moins une conduite de liquide (15, 15') et un fluide de travail externe s'écoulant dans l'au moins une conduite de fluide externe (19) pour utiliser l'énergie thermique générée par l'unité MVR (3).

4. Système énergétique (1, 1', 1") selon l'une quelconque des revendications 1 à 3, dans lequel l'unité MVR (3) comprend au moins une conduite de vapeur secondaire (21) agencée en raccordement avec l'échangeur de chaleur primaire (5) et avec le compresseur (9) pour le transport de vapeur comprimée, qui n'a pas été condensée dans l'échangeur de chaleur primaire (5) en retour vers le compresseur (9).

5. Système énergétique (1, 1', 1") selon l'une quelconque des revendications 1 à 4, dans lequel l'unité MVR (3) comprend un compartiment (8) raccordé à l'échangeur de chaleur primaire (5) et agencé pour collecter la vapeur comprimée condensée provenant de l'échangeur de chaleur primaire (5) et pour collecter la vapeur comprimée, qui n'a pas été condensée dans l'échangeur de chaleur primaire (5), dans lequel l'au moins une conduite de liquide (15, 15', 15'') et/ou l'au moins une conduite de vapeur secondaire (21) est disposée en raccordement avec le compartiment (8).

6. Système énergétique (1, 1', 1") selon l'une quelconque des revendications 1 à 5, dans lequel l'unité MVR (3) comprend une enceinte étanche à la pression commune (23) et dans lequel au moins l'échangeur de chaleur primaire (5) est agencé au sein de l'enceinte étanche à la pression commune (23).

7. Système énergétique (1, 1', 1'') selon la revendication 6, lorsqu'elle dépend de la revendication 4, dans lequel l'enceinte étanche à la pression commune (23) est munie d'une première extrémité (10) et d'une deuxième extrémité (12) et dans lequel l'au moins une conduite de vapeur secondaire (21) est agencée au niveau de la première extrémité (10) de l'enceinte étanche à la pression commune (23) et le compresseur (9) est disposé au niveau de la deuxième extrémité (12) de l'enceinte étanche à la pression commune (23).

8. Système énergétique (1, 1', 1'') selon la revendication 6 ou 7, dans lequel l'enceinte étanche à la pression commune (23) a une forme allongée sensiblement cylindrique, de préférence une forme allongée cylindrique circulaire, le long d'un axe longitudinal (A).

9. Système énergétique (1, 1', 1") selon l'une quelconque des revendications 1 à 8, dans lequel l'échangeur de chaleur primaire (5) comprend une pluralité de tuyaux longitudinaux (14).

10. Système énergétique (1, 1', 1'') selon la revendication 9, dans lequel la vapeur comprimée provenant du compresseur (9) est fournie jusque dans l'intérieur de chaque tuyau de la pluralité de tuyaux longitudinaux (14) pour évaporer le liquide de travail fourni à l'extérieur de chaque tuyau de la pluralité de tuyaux longitudinaux (14), ou dans lequel les extérieurs des tuyaux longitudinaux fonctionnent comme condenseur (13), et les intérieurs des tuyaux longitudinaux fonctionnent comme évaporateur.

11. Système énergétique (1, 1', 1") selon l'une quelconque des revendications précédentes, dans lequel le liquide de travail est l'eau.

12. Procédé de mise en fonctionnement d'un système énergétique (1, 1', 1") selon l'une quelconque des revendications 1 à 11, dans lequel le procédé comprend l'utilisation en externe dudit système énergétique (1, 1', 1"), d'énergie thermique d'un liquide de travail obtenu pendant un processus MVR réalisé par ladite unité MVR (3), de préférence pour des processus de chauffage ou des objets.

13. Procédé selon la revendication 12, dans lequel le procédé comprend l'agencement de l'au moins une conduite de liquide dans une configuration à l'extérieur du système énergétique, de préférence dans une configuration en boucle fermée, et sa fourniture à des consommateurs d'énergie pour toute utilisation applicable.

14. Procédé selon la revendication 12 ou 13, dans lequel le procédé comprend l'échange de chaleur du liquide de travail avec un fluide de travail externe pour utiliser l'énergie thermique générée par l'unité MVR (3).
